# EUROPÄISCHE PATENTSCHRIFT

(11) **EP 0 997 354 B1**
(45) Veröffentlichungstag und Bekanntmachung des Hinweises auf die Patenterteilung: **01.09.2004**
(21) Anmeldenummer: 99118510.9
(22) Anmeldetag: 18.09.1999
(51) Int. Cl.: B60R 21/20, B60R 21/04

(54) **Airbagmodul**
Airbag module
Module pour coussin gonflable de sécurité

(30) Priorität: 27.10.1998 DE 19849490
(43) Veröffentlichungstag der Anmeldung: 03.05.2000
(73) Patentinhaber: DaimlerChrysler AG, 70567 Stuttgart (DE)
(72) Erfinder: Tschäschke, Ulrich, 71139 Ehningen (DE)

(56) Entgegenhaltungen:
- DE-A- 19 612 227
- DE-U- 29 716 793
- DE-U- 29 803 985
- PATENT ABSTRACTS OF JAPAN vol. 1998, no. 01, 30. Januar 1998 (1998-01-30) & JP 09 254736 A (TOYOTA MOTOR CORP), 30. September 1997 (1997-09-30)

## Beschreibung

Die Erfindung betrifft ein Airbagmodul in einem Kraftfahrzeug, mit einem zusammengefalteten Luftsack, insbesondere einem Windowbag, der in einem länglichen Behälter an einem Fahrzeugrahmenteil, insbesondere an einem Dachrahmenteil, untergebracht ist und bei einem Fahrzeugaufprall aufgeblasen und entfaltet wird, und mit einem in oder an dem Behälter angebrachten Energieaufnahmeelement.

Bei einem derartigen Airbagmodul, wie es in der nicht vorveröffentlichten DE 198 38 641 beschrieben ist, hat sich als nachteilig erwiesen, dass das Energieaufnahmeteil beim Entfalten des Luftsacks hinderlich ist. Deshalb ist vorgeschlagen worden, zusätzliche Rampen im Bereich der D- und C-Säule zur Führung des Luftsacks während des Entfaltungsvorgangs anzubringen.

Außerdem ist aus der gattungsgemäßen DE 297 16 793 U1 ein Gassack-Rückhaltesystem für Fahrzeuginsassen bekannt, bei dem eine Innenwand des Behälters und/oder eine Klappe des Behälters als energieabsorbierender Körper ausgebildet ist. Dabei ist der energieabsorbierende Körper insgesamt als geschlossener Körper ausgebildet. Zur Ausrichtung eines in dem Behälter ausgebildeten Schusskanals sind an eine Außenwand des Behälters zahlreiche Stege angeformt. Bei diesem Gassack-Rückhaltesystem muss die Masse des energieabsorbierenden Körpers zusammen mit der Klappe beim Auslösen des Gassacks ausgeschwenkt werden. Die sich daraus ergebende Zeitverzögerung ist unerwünscht.

Aufgabe der Erfindung ist es, die vorab geschilderten Nachteile zu beseitigen. Insbesondere soll das Aufblasen und Entfalten des Luftsacks optimiert werden.

Die Aufgabe wird von einem Airbagmodul mit den Merkmalen des Anpruchs 1 gelöst. Durch die mehrteilige Ausführung des Energieaufnahmeelements verringert sich die beim Aufblasen und Entfalten des Luftsacks bewegte Masse. Außerdem kann auf zusätzliche Leitrampen für den Luftsack verzichten werden.

Erfindungsgemäß ist an dem ersten Teil des Energieaufnahmeelements eine Leitfläche mit einer bestimmten Kontur ausgebildet. Durch die Leitfläche ist ein gezieltes Entfalten des Luftsacks möglich. Selbstverständlich ist es auch möglich, an dem zweiten Teil des Energieaufnahmeelements eine Leitfläche auszubilden.

Eine weitere besondere Ausführungsart der Erfindung ist dadurch gekennzeichnet, dass der erste und der zweite Teil des Energieaufnahmeelements die Form von Halbzylindern mit ebenen Schnittflächen aufweisen. Die ebene Schnittfläche des ersten Teils des Energieaufnahmeelements kann, je nach Bedarf, in beliebige Richtungen ausgerichtet sein.

Eine weitere besondere Ausführungsart der Erfindung ist dadurch gekennzeichnet, dass der erste und der zweite Teil des Energieaufnahmeelements die Form von Halbzylindern mit komplementär gekrümmten Schnittflächen aufweisen. Durch die Krümmung der Schnittflächen kann eine sanfte Richtungsumlenkung erfolgen.

Eine weitere besondere Ausführungsart der Erfindung ist dadurch gekennzeichnet, dass das Energieaufnahmeelement die Form eines Zylinders mit einer Abflachung hat, die sich über die gesamte Länge des Zylinders erstreckt und eine Abdeckung für den Behälter bildet, dass der erste Teil des Energieaufnahmeelements im Querschnitt die Form eines Kreissegments mit einer konkav gekrümmten Schnittfläche aufweist, und dass der zweite Teil des Energieaufnahmeelements die gesamte Abflachung umfasst und eine zu der gekrümmten Schnittfläche des ersten Teils des Energieaufnahmeelements komplementäre konvex gekrümmte Fläche aufweist. Die Abflachung an dem zweiten Teil des Energieaufnahmeelements bildet einen Verschluss für den Behälter. Wenn der zweite Teil wegschwenkt, gibt er die komplette Behälteröffnung frei. Dennoch ist durch die konkav gekrümmte Schnittfläche des ersten Teils des Energieaufnahmeelements eine Führung des Luftsacks beim Entfalten gewährleistet.

Eine weitere besondere Ausführungsart der Erfindung ist dadurch gekennzeichnet, dass der erste und der zweite Teil des Energieaufnahmeelements im Querschnitt die Form eines Kreissegments mit einer konvex gekrümmten Schnittfläche aufweist, und dass der erste und der zweite Teil des Energieaufnahmeelements so zueinander angeordnet sind, dass zwischen den beiden Teilen eine zu dem zusammengefalteten Luftsack gerichtete trichterförmige Öffnung ausgebildet ist. Durch die trichterförmige Öffnung zwischen den beiden Teilen des Energieaufnahmeelements wird ein sanfter Abschluss für den Luftsack im zusammengefalteten Zustand geschaffen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. In der Zeichnung zeigt:
- Figur 1: ein Airbagmodul gemäß der vorliegenden Erfindung im eingebauten Zustand;
- Figur 2: ein Energieaufnahmeelement eines Airbagmoduls gemäß einer ersten Ausführungsform der vorliegenden Erfindung;
- Figur 3: ein Energieaufnahmeelement eines Airbagmoduls gemäß einer zweiten Ausführungsform der vorliegenden Erfindung;
- Figur 4: ein Energieaufnahmeelement eines Airbagmoduls gemäß einer dritten Ausführungsform der vorliegenden Erfindung; und
- Figur 5: ein Energieaufnahmeelement eines Airbagmoduls gemäß einer vierten Ausführungsform der vorliegenden Erfindung.

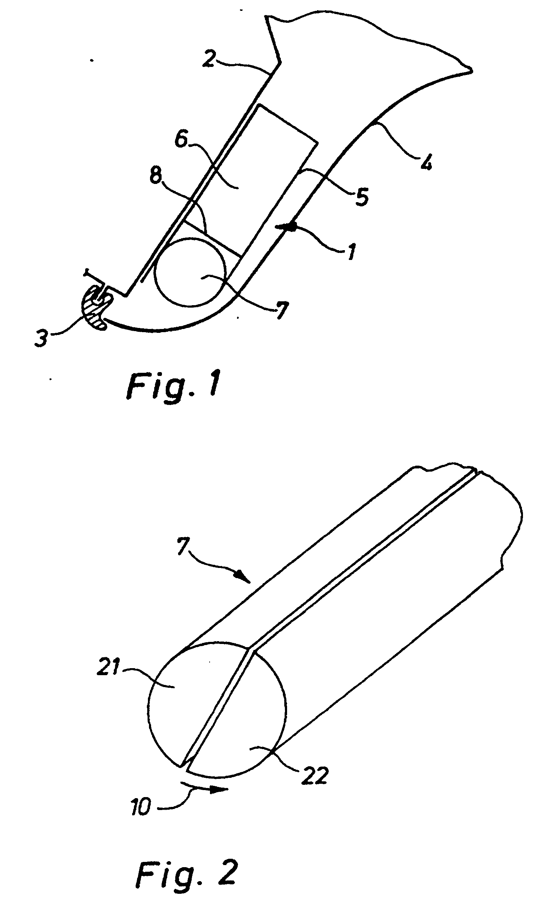

In Figur 1 ist schematisch ein insgesamt mit 1 bezeichnetes Airbagmodul dargestellt, dass an einem Dachrahmenteil 2 befestigt ist. An dem Dachrahmenteil 2 ist eine Profilleiste 3 angebracht, von der ein Dachhimmel 4 ausgeht. Der Dachhimmel 4 verdeckt das Airbagmodul 1.

Das Airbagmodul 1 umfasst einen Behälter 5, in dem ein zusammengefalteter Windowbag 6 untergebracht ist. Ein Ende des Windowbags 6 steht mit einem (nicht dargestellten) Gasgenerator in Verbindung. Das mit 8 bezeichnete freie Ende des zusammengefalteten Windowbags 6 ist zu einem Energieaufnahmeelement 7 gewandt.

Das Energieaufnahmeelement 7 dient dazu, den Insassen insbesondere bei einem Aufprall, bei dem der Windowbag 6 noch nicht ausgelöst ist, nachgebend aufzufangen, wobei vor allem bei der plastischen Verformung des Energieaufnahmeelements 7 Energie absorbiert wird, und der Insasse beim Aufprall dadurch weniger belastet wird. Das Energieaufnahmeelement 7 kann aus einem entsprechend plastisch verformbaren Schaumkörper gebildet sein.

In Figur 2 sieht man, dass das Energieaufnahmeelement 7 aus einem senkrechten Kreiszylinder besteht, der in zwei gleiche Teile 21 und 22 geteilt ist. Der erste Teil 21 des Energieaufnahmeelementes 7 ist an dem Behälter 5 befestigt. Alternativ kann der erste Teil 21 des Energieaufnahmeelementes 7 auch an dem Dachrahmenteil 2 befestigt sein. Die Schnittfläche des halbzylinderförmigen ersten Teils des Energieaufnahmeelementes 7 dient zur Führung des Luftsacks 6 beim Entfalten.

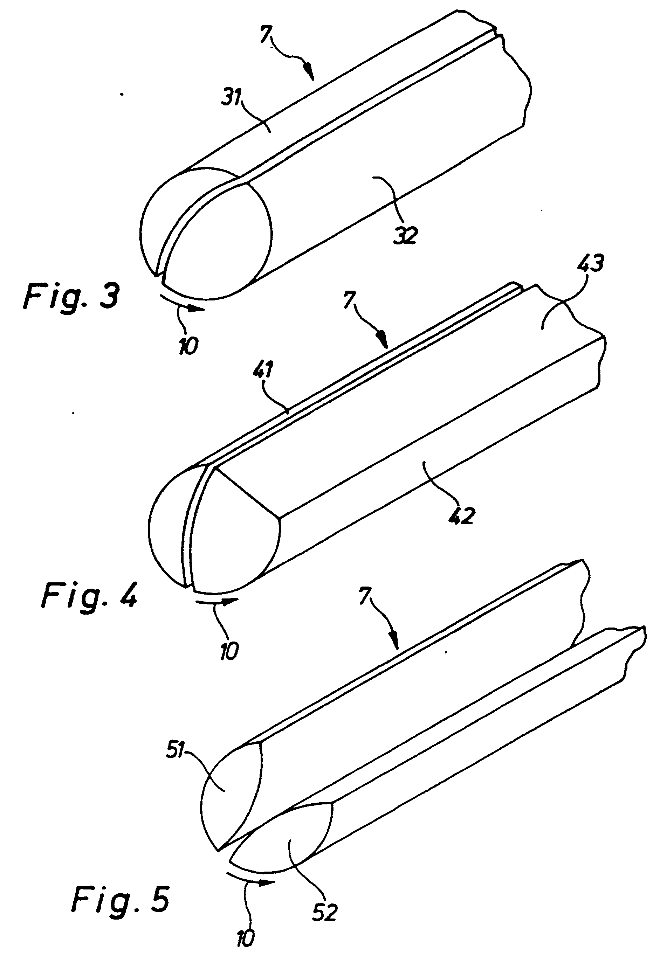

In Figur 3 ist ein Energieaufnahmeelement 7 dargestellt, dass dem in Figur 2 dargestellten Energieaufnahmeelement 7 ähnelt.

Im Unterschied zu der in Figur 1 dargestellten Ausführungsform umfasst das Energieaufnahmeelement 7 der Figur 3 jedoch gekrümmte Schnittflächen. Dadurch wird eine Umlenkung des Windowbags 6 beim Entfalten ermöglicht.

Das in Figur 4 dargestellte Energieaufnahmeelement 7 wird von einem senkrechten Kreiszylinder gebildet, der in zwei Teile 41 und 42 geteilt ist. Der erste Teil 41 hat im Querschnitt die Form eines Kreissegments mit einer gekrümmten Schnittfläche, die beim Entfalten des Luftsacks als Leitfläche dient. Der zweite Teil 42 ist mit einer Abflachung 43 versehen. Die Abflachung 43 bildet eine Anlagefläche für das freie Ende 8 des zusammengefalteten Windowbags 6.

Das in Figur 5 dargestellte Energieaufnahmeelement 7 wird von zwei Teilen 51 und 52 gebildet. Die beiden Teile 51 und 52 haben im Querschnitt die Form eines Kreissegments mit einer konvex gekrümmten Schnittfläche. Die beiden konvex gekrümmten Schnittflächen sind gegenüberliegend so angeordnet, dass sich zwischen ihnen eine trichterförmige Aussparung ergibt. An dieser trichterförmigen Aussparung kommt der Windowbag 6 im zusammengefalteten Zustand in Anlage.

Die zweiten Teile 22, 32, 42 und 52 der vorab beschriebenen Ausführungsformen des Energieaufnahmeelementes 7 sind schwenkbar an dem Behälter 5 (siehe Figur 1) befestigt. Beim Auslösen des Airbagmoduls 1 schwenkt der erste Teil 22, 32, 42 und 52 aus und gibt den Weg für die Entfaltung des Windowbags 6 frei. Der erste Teil 21, 31, 41 und 51 verbleibt in seiner Lage, wobei die Schnittfläche beim Entfalten des Windowbags 6 als Leitfläche dient.

Beim Auslösen entfaltet sich der Windowbag durch die vorgegebene Kontur des Energieaufnahmeelements in die gewünschte Richtung, ohne das zusätzliche Rampen am Fahrzeugrohbau oder an Verkleidungsteilen erforderlich sind. Bei einem Aufprall des Fahrzeugs, bei dem das Airbagmodul ausgelöst wird, wird der Windowbag mit Gas aus einem Gasgenerator befüllt und entfaltet sich. Der Windowbag dehnt sich nach unten über nicht näher dargestellte Seitenscheiben des Fahrzeugs wie ein schützender Vorhang aus. Dadurch wird der Anprall eines Insassen gegen die Seitenscheibe gedämpft.

## Patentansprüche

1. Airbagmodul in einem Kraftfahrzeug, mit einem zusammengefalteten Luftsack (6), insbesondere einem Windowbag, der in einem länglichen Behälter (5) an einem Fahrzeugrahmenteil (2), insbesondere an einem Dachrahmenteil, untergebracht ist und bei einem Fahrzeugaufprall aufgeblasen und entfaltet wird, und mit einem in oder an dem Behälter (5) angebrachten Energieaufnahmeelement (7),
**dadurch gekennzeichnet,**
**dass** das Energieaufnahmeelement (7) mehrteilig ausgebildet ist und mindestens einen ersten halbzylinderförmigen Teil (21, 31, 41, 51), der fest in oder an dem Behälter (5) oder dem Fahrzeugrahmenteil (2) angebracht ist und eine Leitfläche mit einer bestimmten Kontur zur Führung des Luftsacks (6) beim Aufblasen und Entfalten aufweist, und mindestens einen zweiten halbzylinderförmigen Teil (22, 32, 42, 52) aufweist, der schwenkbar in oder an dem Behälter (5) angebracht ist.

2. Airbagmodul nach Anspruch 1,
**dadurch gekennzeichnet,**
**dass** der erste (21) und der zweite Teil (22) des Energieaufnahmeelements (7) die Form von Halbzylindern mit ebenen Schnittflächen aufweisen.

3. Airbagmodul nach Anspruch 1,
**dadurch gekennzeichnet,**
**dass** der erste (31) und der zweite (32) Teil des Energieaufnahmeelements (7) die Form von Halbzylindern mit komplementär gekrümmten Schnittflächen aufweisen.

4. Airbagmodul nach Anspruch 1,
**dadurch gekennzeichnet,**
**dass** das Energieaufnahmeelement (7) die Form eines Zylinders mit einer Abflachung (43) hat, die sich über die gesamte Länge des Zylinders erstreckt und eine Abdeckung für den Behälter (5) bildet, dass der erste Teil (41) des Energieaufnahmeelements (7) im Querschnitt die Form eines Kreissegments mit einer konkav gekrümmten Schnittfläche aufweist, und dass der zweite Teil (42) des Energieaufnahmeelements (7) die gesamte Abflachung (43) umfasst und eine zu der gekrümmten Schnittfläche des ersten Teils (41) des Energieaufnahmeelements (7) komplementär konvex gekrümmte Fläche aufweist.

5. Airbagmodul nach Anspruch 1,
**dadurch gekennzeichnet,**
**dass** der erste (51) und der zweite (52) Teil des Energieaufnahmeelements (7) im Querschnitt die Form eines Kreissegments mit einer konvex gekrümmten Schnittfläche aufweist, und dass der erste (51) und der zweite (52) Teil des Energieaufnahmeelements (7) so zueinander angeordnet sind, dass zwischen den beiden Teilen (51, 52) eine zu dem zusammengefalteten Luftsack (6) gerichtete trichterförmige Öffnung ausgebildet ist.

## Claims

1. An airbag module in a motor vehicle having a folded airbag (6), in particular a window bag, which is accommodated in a longish container (5) on a vehicle frame part (2), in particular on a roof frame part, and is inflated and unfolded in the event of a vehicle impact and having an energy absorbing element (7) contained in or on the container (5),
**characterised in that**
the energy absorbing element (7) is designed in several pieces and has at least one first semi-cylindrically shaped part (21, 31, 41, 51) which is fixed in or to the container (5) or the vehicle frame part (2) and has a guide surface with a specific contour to guide the airbag (6) as it inflates and unfolds, and at least one second semi-cylindrically shaped part (22, 32, 42, 52) which is fitted in or to the container (5) in such a manner that it is able to pivot.

2. An airbag module in accordance with claim 1,
**characterised in that**
the first (21) and the second (22) part of the energy absorbing element (7) are shaped like semi-cylinders with flat planes of section.

3. An airbag module in accordance with claim 1,
**characterised in that**
the first (31) and the second (32) part of the energy absorbing element (7) are shaped like semi-cylinders with complementarily curved planes of section.

4. An airbag module in accordance with claim 1,
**characterised in that**
the energy absorbing element (7) is shaped like a cylinder with a flat section (43) which extends along its entire length and forms a cover for the container (5), the cross-section of the first part (41) of the energy absorbing element (7) is shaped like the segment of a circle with a concavely curved plane of section and the second part (42) of the energy absorbing element (7) comprises the entire flat section (43) and has a surface which is convexly curved complementarily to the curved plane of section of the first part (44)of the energy absorbing element (7).

5. An airbag module in accordance with claim 1,
**characterised in that**
the cross-section of the first (51) and the second (52) parts of the energy absorbing element (7) is shaped like the segment of a circle with a convexly curved plane of section and the first (51) and the second (52) parts of the energy absorbing element (7) are positioned in relation to one another in such a manner that a funnel-shaped opening oriented towards the folded airbag (6) is formed between the two parts (51, 52).

## Revendications

1. Module pour coussin gonflable de sécurité, dans un véhicule automobile, avec un sac à air (6) replié, en particulier un sac pour fenêtre, logé dans un récipient (5) allongé, sur une partie de cadre de véhicule (2), en particulier sur une partie de cadre de toit, et qui est gonflé et déployé en cas d'impact sur le véhicule, et avec un élément de captation d'énergie (7), monté dans ou sur le récipient (5),
**caractérisé en ce que** l'élément de captation d'énergie (7) est réalisé en plusieurs parties et présente au moins une première partie (21, 31, 41, 51) en forme de demi-cylindre, montée rigidement dans ou sur le récipient (5) ou la partie de cadre de véhicule (2), et une face de guidage, ayant un contour déterminé, pour assurer le guidage du sac à air (6), lors du gonflage et du déploiement, et présente au moins une deuxième partie (22, 32, 42, 52) en forme de demi-cylindre, montée de façon à pouvoir pivoter dans ou sur le récipient (5).

2. Module pour coussin gonflable de sécurité selon la revendication 1, **caractérisé en ce que** la première (21) et la deuxième partie (22) de l'élément de captation d'énergie (7) présentent la forme de demi-cylindres à faces de coupe planes.

3. Module pour coussin gonflable de sécurité selon la revendication 1, **caractérisé en ce que** la première partie (31) et la deuxième partie (32) de l'élément de captation d'énergie (7) présentent la forme de demi-cylindres, ayant des faces de coupe incurvées, complémentaires.

4. Module pour coussin gonflable de sécurité selon la revendication 1, **caractérisé en ce que** l'élément de captation d'énergie (7) a la forme d'un cylindre ayant un méplat (43), s'étendant sur la totalité de la longueur du cylindre et formant un recouvrement pour le cylindre (5), **en ce que** la première partie (41) de l'élément de captation d'énergie (7) présente, observée en vue en coupe, la forme d'un segment de cercle ayant une face de coupe d'incurvation concave, et **en ce que** la deuxième partie (42) de l'élément de captation d'énergie (7) entoure l'ensemble du méplat (43) et présente une face d'incurvation convexe, complémentaire de la face de la face de coupe incurvée, appartenant à la première partie (41) de l'élément de captation d'énergie (7).

5. Module pour coussin gonflable de sécurité selon la revendication 1, **caractérisé en ce que** la première partie (51) et la deuxième partie (52) de l'élément de captation d'énergie (7), observées en vue en coupe, présentent la forme d'un segment de cercle à face de coupe à incurvation convexe, et **en ce que** la premièrepartie (51) et la deuxième partie (52) de l'élément de captation d'énergie (7) sont disposées l'une par rapport à l'autre, de manière que, entre les deux parties (51, 52), soit réalisée une ouverture en forme d'entonnoir, orientée vers le sac à air (6) replié.
